# EUROPÄISCHE PATENTSCHRIFT

(11) **EP 4 492 529 B1**
(45) Veröffentlichungstag und Bekanntmachung des Hinweises auf die Patenterteilung: **09.12.2026**
(21) Anmeldenummer: 24185867.9
(22) Anmeldetag: 02.07.2024
(51) Int. Cl.: H01M 10/42, H01M 10/48, H01M 50/233, H01M 50/247, H01M 50/284, H02H 5/08, H01M 50/24, H01M 50/262

(54) **AKKUMULATOR FÜR ARBEITSGERÄTE**
ACCUMULATOR FOR POWERTOOL DEVICES
ACCUMULATEUR POUR OUTILS ÉLECTRIQUES

(30) Priorität: 10.07.2023 DE 102023118225; 21.07.2023 DE 102023119394
(43) Veröffentlichungstag der Anmeldung: 15.01.2025
(73) Patentinhaber: Einhell Germany AG, 94405 Landau / Isar (DE)
(72) Erfinder: Mayr, Stefan, 94405 Landau / Isar (DE)
(74) Vertreter: Canzler & Bergmeier Patentanwälte Partnerschaft mbB

(56) Entgegenhaltungen:
- WO-A1-2023/039723
- CN-A- 114 335 777
- DE-A1- 102013 223 320

## Beschreibung

Die vorliegende Erfindung betrifft einen Akkumulator, insbesondere Arbeitsgeräteakkumulator, für Arbeitsgeräte mit einem Gehäuse, das einen Innenraum umgibt, mit zumindest einer im Innenraum angeordneten Energiespeichereinheit, mit einer Kontaktierungsvorrichtung, mittels der eine elektrische Verbindung zwischen der Energiespeichereinheit und dem Arbeitsgerät ausbildbar ist, und mit einem Verriegelungsmechanismus, mittels der der Akkumulator mit dem Arbeitsgerät lösbar verbindbar ist.

Aus der DE 10 2011 081 819 A1 ist ein Akkumulator zum Betreiben von Handwerkzeugmaschinen bekannt. DE 10 2013 223 320 A1 offenbart eine Akkuvorrichtung mit einem Sicherheitssystem.

Aufgabe der vorliegenden Erfindung ist es, einen konstruktiv einfachen Akku zu schaffen, der wasserdicht ist.

Die Aufgabe wird gelöst durch einen Akkumulator mit den Merkmalen des unabhängigen Patentanspruchs.

Vorgeschlagen wird ein Akkumulator für Arbeitsgeräte. Der Akkumulator kann ein Arbeitsgeräteakkumulator sein. Der Akkumulator kann im Folgenden auch als Akku abgekürzt werden.

Der Akku umfasst ein Gehäuse, das einen Innenraum umgibt.

Des Weiteren weist der Akku zumindest eine im Innenraum angeordnete Energiespeichereinheit auf. Mittels der Energiespeichereinheit kann das Arbeitsgerät mit elektrischer Energie versorgt werden.

Ferner umfasst der Akku eine Kontaktierungsvorrichtung, mittels der eine elektrische Verbindung zwischen der Energiespeichereinheit und dem Arbeitsgerät ausbildbar ist. Zum einen kann hierdurch die elektrische Energie zum Arbeitsgerät geführt werden. Zum anderen kann hiermit der Akku mit einem Ladegerät gekoppelt werden, um den Akku aufladen zu können.

Weiterhin weist der Akku einen Verriegelungsmechanismus, mittels dem der Akkumulator mit dem Arbeitsgerät lösbar verbindbar ist.

Zusätzlich ist im Gehäuse zumindest ein Nassraum angeordnet, wobei im Nassraum zumindest teilweise der Verriegelungsmechanismus und/oder zumindest teilweise die Kontaktierungsvorrichtung angeordnet ist.

Ebenfalls zusätzlich umfasst der Akkumulator zumindest eine Abdichtvorrichtung, die den Innenraum gegenüber den zumindest einen Nassraum wasserdicht abdichtet. Falls Wasser in den Nassraum gelangt, kann mit Hilfe der Abdichtvorrichtung verhindert werden, dass das Wasser weiter in den Innenraum und insbesondere zur Energiespeichereinheit und zu einer Steuer- und/oder Regelungselektronik des Akkus gelangt.

Gemäß einer vorteilhaften Weiterbildung der Erfindung ist es nützlich, wenn der Akkumulator einen ersten und einen zweiten Nassraum aufweist, wobei im ersten Nassraum der Verriegelungsmechanismus und im zweiten Nassraum die Kontaktierungsvorrichtung zumindest teilweise angeordnet ist.

Ein Vorteil resultiert, wenn der Akkumulator zumindest eine Abtrennvorrichtung umfasst, die den Innenraum vom zumindest einen Nassraum abtrennt. Die Abtrennvorrichtung kann die Form einer Wanne aufweisen, so dass Wasser aufgefangen und es verhindert werden kann, dass das Wasser in den Innenraum gelangt.

Des Weiteren ist es vorteilhaft, wenn der Akkumulator eine erste Abtrennvorrichtung für den ersten Nassraum und eine zweite Abtrennvorrichtung für den zweiten Nassraum umfasst.

Vorteilhaft ist es, wenn das Gehäuse eine Gehäuseoberschale und eine Gehäuseunterschale umfasst, die miteinander wasserdicht verbunden sind. Zwischen der Gehäuseoberschale und der Gehäuseunterschale kann beispielsweise eine Dichtanordnung, insbesondere ein Dichtelement, angeordnet sein, so dass der Innenraum abgedichtet ist. Des Weiteren können die Gehäuseoberschale und die Gehäuseunterschale miteinander mittels zumindest einem Verbindungselement und/oder Befestigungselement miteinander verbunden sein. Beispielsweise können die Gehäuseoberschale und die Gehäuseunterschale miteinander form-, kraft- und/oder stoffschlüssig verbunden sein. Um eine einfache Verbindung zwischen der Gehäuseoberschale und der Gehäuseunterschale auszubilden, ist es vorteilhaft, wenn die Gehäuseoberschale und die Gehäuseunterschale miteinander verklipst sind. Hierbei greifen entsprechende Klippelemente in entsprechende Nuten und/oder Aussparungen. Zusätzlich oder alternativ können die Gehäuseoberschale und die Gehäuseunterschale auch mittels zumindest einer Schraube verschraubt sein. Durch das Verklipsen und/oder das Verschrauben können die Gehäuseoberschale und die Gehäuseunterschale auch wieder voneinander gelöst werden, um beispielsweise die Energiespeichereinheit auszutauschen bzw. um den Akku zu reparieren.

Des Weiteren ist es vorteilhaft, wenn der zumindest eine Nassraum, insbesondere der erste und/oder der zweite Nassraum, zwischen dem Gehäuse, insbesondere der Gehäuseoberschale, und der zumindest einen Abtrennvorrichtung, insbesondere der ersten und/oder der zweiten Abtrennvorrichtung, ausgebildet ist.

Nützlich ist es, wenn der Verriegelungsmechanismus zumindest ein Verriegelungselement aufweist, mittels dem der Akkumulator mit dem Arbeitsgerät verrastet werden kann.

Ein Vorteil resultiert, wenn der Verriegelungsmechanismus zumindest ein Betätigungselement aufweist, mittels dem das Verriegelungselement betätigt werden kann, so dass der Akkumulator vom Arbeitsgerät gelöst werden kann.

Vorteilhaft ist es, wenn der Verriegelungsmechanismus, insbesondere das Verriegelungselement und/oder das Betätigungselement, derart ausgebildet ist, dass Wasser daran vorbei aus dem Nassraum austreten kann. Der Verriegelungsmechanismus kann von einer Verriegelungsstellung in eine Entriegelungsstellung bewegt werden. In der Verriegelungsstellung ist der Akku mit dem Arbeitsgerät verriegelt. In der Entriegelungsstellung kann der Akku vom Arbeitsgerät gelöst werden. Beispielsweise kann das Betätigungselement betätigt bzw. gedrückt werden, um den Verriegelungsmechanismus von der Verriegelungsstellung in die Entriegelungsstellung zu bewegen. Insbesondere kann das Verriegelungselement die Verriegelungsstellung und die Entriegelungsstellung aufweisen und/oder zwischen beiden Stellungen bewegt werden. Beim Betätigen des Betätigungselements kann das Verriegelungselement von der Verriegelungsstellung in die Entriegelungsstellung bewegt werden. In der Verriegelungsstellung kann das Verriegelungselement und/oder das Betätigungselement den Nassraum beispielsweise verschließen. Hierbei können das Verriegelungselement und/oder das Betätigungselement entsprechende Öffnungen verschließen, wobei diese Öffnungen im Folgenden erläutert werden. In der Entriegelungsstellung können das Verriegelungselement und/oder das Betätigungselement den Nassraum öffnen, so dass das Wasser am Verriegelungselement und/oder am Betätigungselement vorbei aus dem Nassraum ausströmen kann. Das Verriegelungselement und/oder das Betätigungselement können in der Entriegelungsstellung die entsprechenden Öffnungen freigeben, so dass das Wasser durch die Öffnungen austreten kann.

Von Vorteil ist es, wenn im, vorzugsweise ersten, Nassraum zumindest eine Anzeigeeinheit angeordnet ist, mittels der ein Ladezustand der Energiespeichereinheit angezeigt werden kann.

Ebenso ist es vorteilhaft, wenn im, vorzugsweise ersten, Nassraum ein Schalter angeordnet ist, mittels dem die Anzeigeeinheit aktiviert werden kann.

Es ist von Vorteil, wenn das Gehäuse, insbesondere die Gehäuseoberschale, zumindest eine Öffnung aufweist, durch die das Verriegelungselement, das Betätigungselement, die Anzeigeeinheit, Kontaktelemente der Kontaktierungsvorrichtung, die Kontaktierungsvorrichtung und/oder der Schalter aus dem zumindest einen Nassraum an eine Außenseite des Gehäuses geführt ist.

Gemäß einer vorteilhaften Weiterbildung der Erfindung ist es nützlich, wenn das Verriegelungselement, das Betätigungselement, die Anzeigeeinheit und/oder der Schalter die Öffnung zumindest teilweise verschließt.

Vorteilhaft ist es, wenn die Abdichtvorrichtung in einem Randbereich der Abtrennvorrichtung angeordnet ist.

Vorteilhaft ist es, wenn die Abdichtvorrichtung zwischen der Abtrennvorrichtung und dem Gehäuse, insbesondere der Gehäuseoberschale, angeordnet ist und/oder wenn die zumindest eine Abdichtvorrichtung die zumindest eine Öffnung umrandet.

Eine Verbesserung resultiert, wenn die Abdichtvorrichtung eine Abdichtnut und ein in der Abdichtnut angeordnetes Abdichtelement umfasst, wobei das Abdichtelement vorzugsweise eine Dichtmasse, insbesondere eine Schaumraupe, ist.

Gemäß einer vorteilhaften Weiterbildung der Erfindung ist es nützlich, wenn das Wasser zwischen Verriegelungselement, Betätigungselement, Anzeigeeinheit und/oder Schalter und dem Gehäuse, insbesondere der Gehäuseoberschale, insbesondere durch die Öffnung, aus dem Nassraum austreten kann. Hierdurch kann das Wasser, beispielsweise durch einfache Betätigung des Betätigungselements, aus dem Nassraum herausgeführt werden.

Es ist vorteilhaft, wenn die Abtrennvorrichtung eine Schalterabdeckung aufweist, so dass der Schalter wasserdicht gegenüber dem Nassraum abgedichtet ist.

Es bringt Vorteile, wenn die Abtrennvorrichtung eine Anzeigenabdeckung aufweist, so dass die Anzeigeeinheit wasserdicht gegenüber dem Nassraum abgedichtet ist.

Eine Verbesserung resultiert, wenn die Abtrennvorrichtung auf einem Aufsteckbereich des Akkumulators aufgesteckt ist.

Des Weiteren kann der Akkumulator einen Feuchtigkeitssensor zur Ermittlung einer Feuchtigkeit im ersten Nassraum, im zweiten Nassraum, im Innenraum und/oder im Bereich der Kontaktierungsvorrichtung umfassen. Mittels des zumindest einen Feuchtigkeitssensors kann Feuchtigkeit bzw. Wasser erkannt werden. Hierdurch kann der Akku vor Beschädigung geschützt werden. Wird die Feuchtigkeit erkannt, kann der Akku abgeschaltet werden, so dass beispielsweise ein Kurzschluss verhindert wird.

Vorteilhaft ist es, wenn der Feuchtigkeitssensor ein Sensorelement umfasst, das im ersten Nassraum, im zweiten Nassraum, im Innenraum und/oder im Bereich der Kontaktierungsvorrichtung angeordnet ist. Das Sensorelement kann beispielsweise ein Fühler sein, der im ersten Nassraum, im zweiten Nassraum, im Innenraum und/oder im Bereich der Kontaktierungsvorrichtung angeordnet ist bzw. der sich in zumindest einen der genannten Räume hineinerstreckt. Zusätzlich oder alternativ kann das Sensorelement auch ein Kontaktelement der Kontaktierungsvorrichtung sein. Mit Hilfe des Kontaktelements der Kontaktierungsvorrichtung kann mittels einer Potentialverschiebung die Feuchtigkeit ermittelt werden.

Von Vorteil ist es hierbei, wenn der Feuchtigkeitssensor im zweiten Nassraum und/oder im Bereich der Kontaktierungsvorrichtung angeordnet ist, da in diesem Bereich die Kontaktelemente angeordnet sind, an denen eine elektrische Spannung anliegt.

Der zumindest eine Feuchtigkeitssensor kann beispielsweise als kapazitiver Sensor ausgebildet sein.

Ebenso ist es vorteilhaft, wenn der Akkumulator eine Steuereinheit umfasst, die derart ausgebildet ist, dass diese bei mittels des zumindest einen Feuchtigkeitssensors erkannter Feuchtigkeit den Akkumulator in einen Sicherheitszustand versetzen kann. Die Steuereinheit ist hierzu mit dem zumindest einen Feuchtigkeitssensor verbunden. Die Steuereinheit kann hierbei auch Teil des Feuchtigkeitssensors sein, da die Steuereinheit mit Hilfe des Sensorelements die Feuchtigkeit ermittelt. Die Steuereinheit kann beispielsweise die Kontaktelemente spannungslos schalten, so dass ein Kurzschluss verhindert wird, auch wenn Feuchtigkeit zu den Kontaktelementen gelangt.

Weitere Vorteile der Erfindung sind in den nachfolgenden Ausführungsbeispielen beschrieben. Es zeigen:
- **Figur 1**: eine perspektivische Ansicht eines Akkumulators, mit einem Verriegelungsmechanismus, der derart eingestellt ist, dass der Akkumulator mit einem Arbeitsgerät verbunden ist,
- **Figur 2**: eine perspektivische Ansicht eines Akkumulators, bei dem ein Betätigungselement eines Verriegelungsmechanismus betätigt ist, so dass der Akkumulator von einem Arbeitsgerät gelöst werden kann,
- **Figur 3**: eine perspektivische Ansicht eines Akkumulators ohne Gehäuseoberschale,
- **Figur 4**: eine perspektivische Ansicht eines Akkumulators ohne Gehäuseoberschale und ohne Verriegelungsmechanismus,
- **Figur 5**: eine perspektivische Ansicht auf die erste Abtrennvorrichtung,
- **Figur 6**: eine perspektivische Ansicht auf die Gehäuseoberschale von oben,
- **Figur 7**: eine perspektivische Ansicht in die Gehäuseoberschale von unten hinein und
- **Figur 8**: eine perspektivische Ansicht auf eine zweite Abtrennvorrichtung.

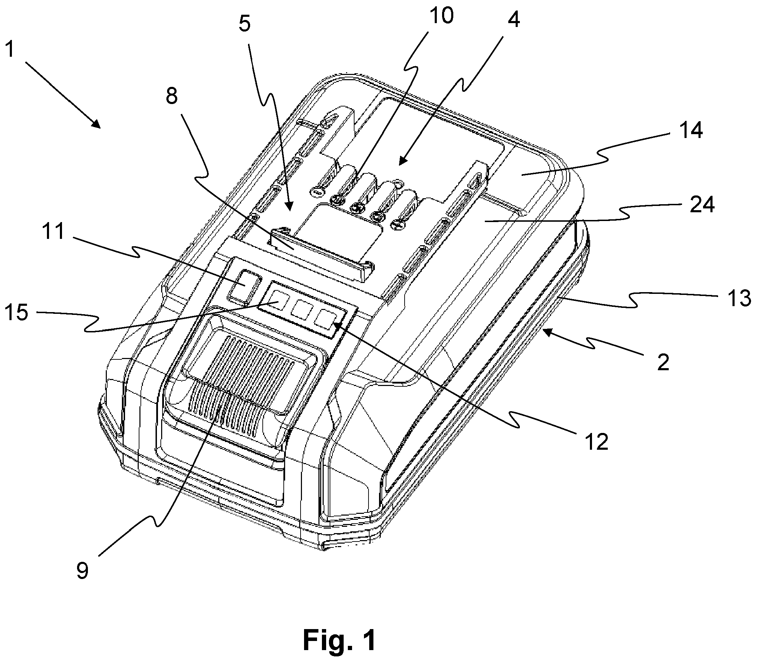

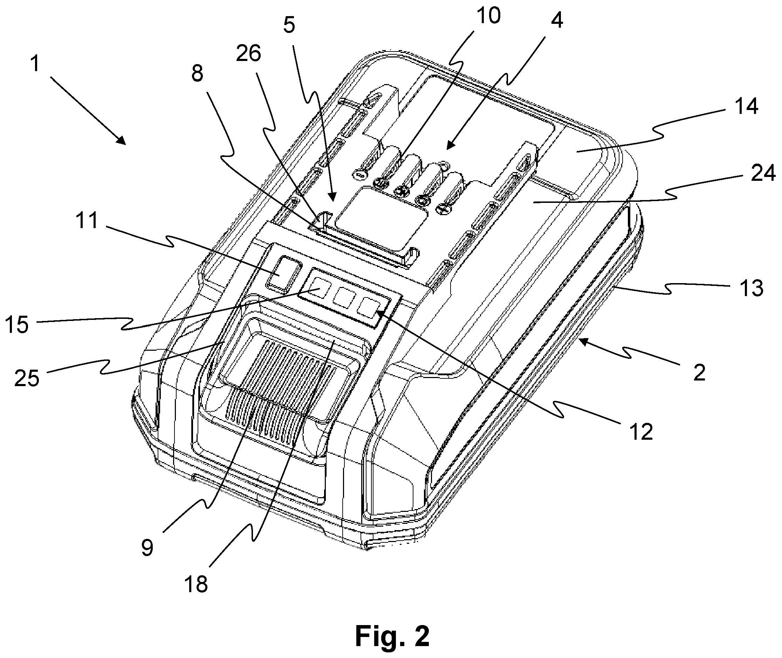

In den Figuren 1 und 2 ist ein Akkumulator 1 gezeigt, mit dem ein hier nicht gezeigtes Arbeitsgerät mit elektrischer Energie versorgt werden kann. Der Akkumulator 1 kann somit ein Arbeitsgerätakkumulator sein. Beim Arbeitsgerät kann es sich beispielsweise um einen Akkuschrauber, einen akkubetriebenen Winkelschleifer, eine Stichsäge, einen elektrischen Rasenmäher oder ähnliches handeln. Kleinere Arbeitsgeräte können hierbei mit einem Akkumulator 1 betrieben werden, wohingegen es üblich ist, dass größere Arbeitsgeräte, wie beispielsweise der Rasenmäher, mit mehreren Akkumulatoren 1 betrieben werden. Der Akkumulator 1 kann auch lediglich als Akku 1 bezeichnet werden.

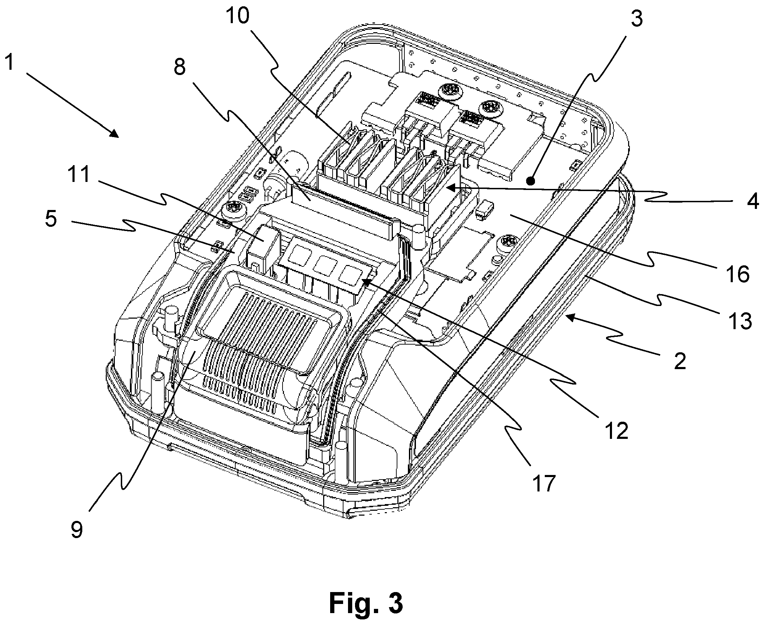

Der Akku 1 umfasst ein Gehäuse 2, das einen Innenraum 3 umgibt. Der Innenraum 3 ist in Figur 3 gezeigt und mit einem Bezugszeichen versehen. Im Innenraum 3 ist eine in den Figuren nicht gezeigte Energiespeichereinheit angeordnet, die die elektrische Energie speichern und bereitstellen kann.

Der Akku 1 umfasst weiterhin eine Kontaktierungsvorrichtung 4, mittels der eine elektrische Verbindung zwischen der Energiespeichereinheit und dem Arbeitsgerät ausbildbar ist. Mit Hilfe der Kontaktierungsvorrichtung 4 kann die elektrische Energie von der Energiespeichereinheit auf das Arbeitsgerät übertragen werden. Weiterhin kann mit Hilfe der Kontaktierungsvorrichtung 4 die Energiespeichereinheit wieder aufgeladen werden. Mit Hilfe der Kontaktierungsvorrichtung 4 kann eine elektrische Verbindung zu einem Ladegerät ausgebildet werden. Die Kontaktierungsvorrichtung 4 umfasst ferner mehrere Kontaktelemente 10, wobei hier der Einfachheit lediglich ein Kontaktelement 10 mit einem Bezugszeichen versehen ist. Die Kontaktelemente 10 sind beispielsweise metallische Kontaktklemmen, die die elektrische Energie übertragen.

Des Weiteren umfasst der Akku 1 einen Verriegelungsmechanismus 5, mittels dem der Akku 1 mit dem Arbeitsgerät lösbar verbunden werden kann. Der Verriegelungsmechanismus 5 kann hierbei wieder gelöst werden, um den Akku 1 vom Arbeitsgerät zur trennen. Der Verriegelungsmechanismus 5 umfasst in diesem Ausführungsbeispiel ein Verriegelungselement 8 und ein Betätigungselement 9. Mithilfe des Betätigungselement 9 kann das Verriegelungselement 8 gelöst werden. In der Figur 1 ist der Verriegelungsmechanismus 5 gezeigt, sodass dieser den Akku 1 mit dem Arbeitsgerät verbindet.

Wie in Figur 1 zu sehen ist, befindet sich das Verriegelungselement 8 in einer Verriegelungsstellung. In Figur 2 ist der Verriegelungsmechanismus 5 gezeigt, so dass der Akku 1 vom Arbeitsgerät gelöst werden kann. Das Verriegelungselement 8 befindet sich in Figur 2 in einer Entriegelungsstellung. Das Verriegelungselement 8 kann von der Verriegelungsstellung in die Entriegelungsstellung gebracht werden, wenn das Betätigungselement 9 betätigt wird. Das Betätigungselement 9 ist in den gezeigten Ausführungsbeispielen als Druckknopf ausgebildet. Wird das derart ausgebildete Betätigungselement 9 gedrückt, kann das Verriegelungselement 8 von der Verriegelungsstellung in die Entriegelungsstellung gebracht werden. In der Figur 2 ist das Betätigungselement 9 gezeigt, wenn es gedrückt ist. Hierbei wird das Betätigungselement 9 in das Gehäuse 2 hineingedrückt.

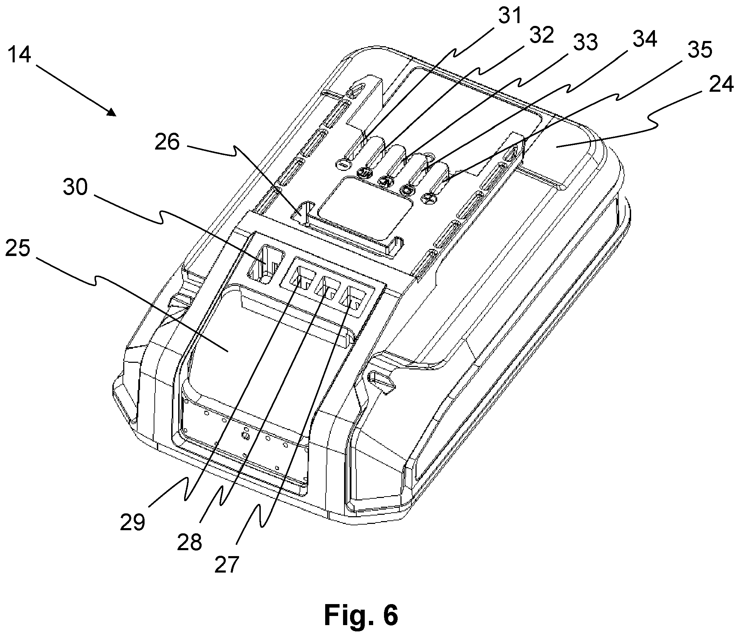

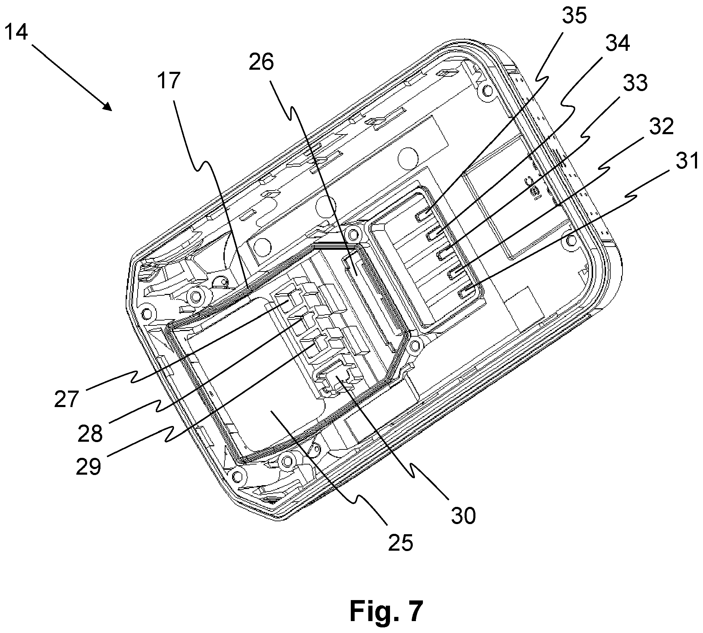

In der Figur 2 ist außerdem eine erste Öffnung 25 und eine zweite Öffnung 26 mit einem Bezugszeichen versehen. Diese beiden Öffnungen 25, 26 sind nochmals in den Figuren 6 und 7 besser zu sehen und werden dort näher erläutert.

Wie in der Figur 2 zu sehen ist, geben das Betätigungselement 9 die erste Öffnung 25 und das Verriegelungselement 8 die zweite Öffnung 26 in der Entriegelungsstellung frei. Infolgedessen kann das Wasser aus dem ersten Nassraum 6 austreten. In der Verriegelungsstellung des Betätigungselement 9 und/oder des Verriegelungselements 8 verschließen diese die entsprechenden Öffnungen 25, 26. Hierdurch kann das Eindringen von Wasser in den ersten Nassraum 6 verhindert bzw. zumindest vermindert werden.

Ferner ist in den Figuren 1 und 2 eine Anzeigeeinheit 12 gezeigt, mittels der ein Ladezustand der Energiespeichereinheit angezeigt werden kann. Die Anzeigeeinheit 12 kann hierbei mehrere Anzeigeelemente 15 umfassen. In dem vorliegenden Ausführungsbeispiel umfasst die Anzeigeeinheit 12 drei Anzeigeelemente 15, wobei lediglich ein Anzeigeelement 15 mit einem Bezugszeichen versehen ist. Die Anzeigeelemente 15 können beispielsweise LEDs sein.

Außerdem umfasst der Akku 1 einen Schalter 11, mittels dem die Anzeigeeinheit 12 aktiviert werden kann. Der Schalter 11 kann betätigt werden, so dass für eine gewisse Zeit die Anzeigeeinheit 12 den Ladestatus der Energiespeichereinheit anzeigt.

Das Gehäuse 2 umfasst weiterhin eine Gehäuseunterschale 13 und eine Gehäuseoberschale 14. Die Gehäuseunterschale 13 und die Gehäuseoberschale 14 sind hierbei wasserdicht miteinander verbunden, so dass verhindert wird, dass Wasser in den Innenraum 3 eintritt. In den hier gezeigten perspektivischen Ansichten ist die Gehäuseoberschale 14 oben bzw. der Blick ist in dieser perspektivischen Ansicht auf die Gehäuseoberschale 14 gerichtet.

Der Akku 1 und/oder das Gehäuse 2 weisen ferner eine Außenseite 24 auf.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

Figur 3 zeigt eine perspektivische Ansicht des Akkus 1 mit entfernter Gehäuseoberschale 14, so dass in den Innenraum 3 geblickt werden kann. Das Gehäuse 2 ist infolgedessen teilweise geöffnet dargestellt.

Zu sehen ist hier eine Platine 16, die Steuerungs- und/oder Regelungselektronik zum Betreiben des Akkus 1 umfasst. Die Platine 16 ist ebenfalls im Innenraum 3 angeordnet. In dieser Perspektive ist die Energiespeichereinheit hinter der Platine 16 angeordnet. Die Energiespeichereinheit kann zwischen der Gehäuseunterschale 13 und der Platine 16 angeordnet sein.

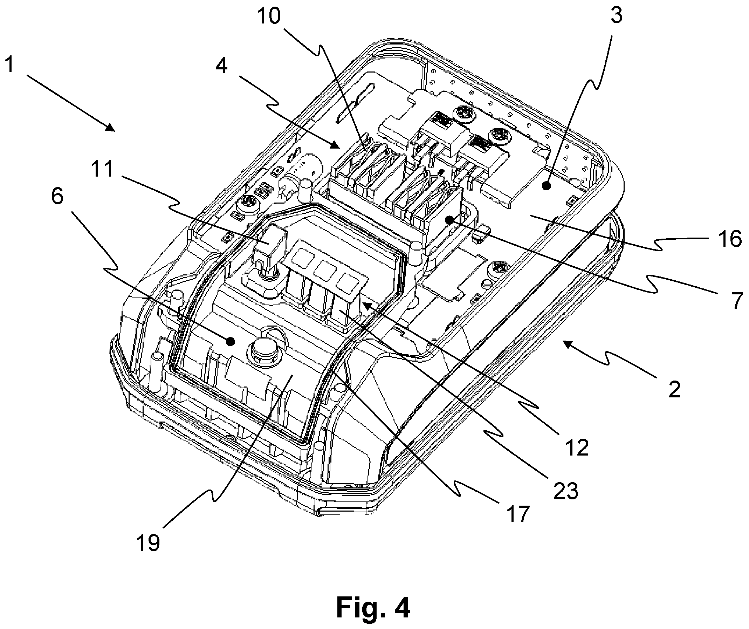

Figur 4 zeigt eine weitere perspektivische Ansicht des Akkus 1 mit entfernter Gehäuseoberschale 14 und entferntem Verriegelungsmechanismus 5.

Der Akku 1 weist im Gehäuse 2 zumindest einen Nassraum 6, 7 auf, in dem die Kontaktierungsvorrichtung 4 und/oder der Verriegelungsmechanismus 5 angeordnet ist.

In diesem Ausführungsbeispiel der Figur 4 ist ein erster Nassraum 6 gezeigt, in dem der Verriegelungsmechanismus 5 angeordnet ist, der hier, wie bereits gesagt, nicht gezeigt ist.

Ferner ist hier ein zweiter Nassraum 7 gezeigt, in dem die Kontaktierungsvorrichtung 4 angeordnet ist.

Des Weiteren umfasst der Akku 1 zumindest eine Abdichtvorrichtung 17, die den Innenraum 3 gegenüber den zumindest einen Nassraum 6, 7 wasserdicht abdichtet. Hier ist eine erste Abdichtvorrichtung 17 gezeigt, die den Innenraum 3 gegenüber dem ersten Nassraum 6 wasserdicht abdichtet. Infolgedessen kann verhindert werden, dass Wasser vom Nassraum 6, 7 in den Innenraum 3 gelangt. Falls somit Wasser in den zumindest einen Nassraum 6, 7 gelangt, verbleibt es dort und gelangt nicht in den Innenraum 3, in dem die Platine 16 mit der Elektronik und die zumindest eine Energiespeichereinheit angeordnet ist.

Aus dem zumindest einen Nassraum 6, 7 kann das Wasser dann wieder entfernt werden, indem beispielsweise das Betätigungselement 9 gedrückt wird. Hierdurch kann ein Spalt 18 zwischen Betätigungselement 9 und der Gehäuseoberschale 14 ausgebildet werden, über den in diesem Beispiel das Wasser den ersten Nassraum 6 verlassen kann.

In der Figur 4 ist des Weiteren eine erste Abtrennvorrichtung 19 gezeigt. Mit Hilfe der ersten bzw. der zumindest einen Abtrennvorrichtung 19 kann der entsprechende Nassraum 6, 7 gegenüber dem Innenraum 3 wasserdicht abgedichtet werden. Die erste bzw. die zumindest eine Abtrennvorrichtung 19 ist, wie hier gezeigt ist, beispielsweise als Wanne ausgeführt oder wannenförmig, so dass das Wasser im entsprechenden Nassraum 6, 7 aufgenommen werden kann, wobei verhindert wird, dass das Wasser in den Innenraum 3 gelangt.

Gemäß Figur 4 umfasst die Anzeigeeinheit 12 einen Lichtleiter 23, mit dem das Licht von LEDs, die sich unterhalb der ersten Abtrennvorrichtung 19 befinden, an die Außenseite 24 des Gehäuses 2 bzw. des Akkus 1 geleitet werden kann. Hier sind insgesamt drei Lichtleiter 23 gezeigt, wobei lediglich ein Lichtleiter 23 mit einem Bezugszeichen versehen ist.

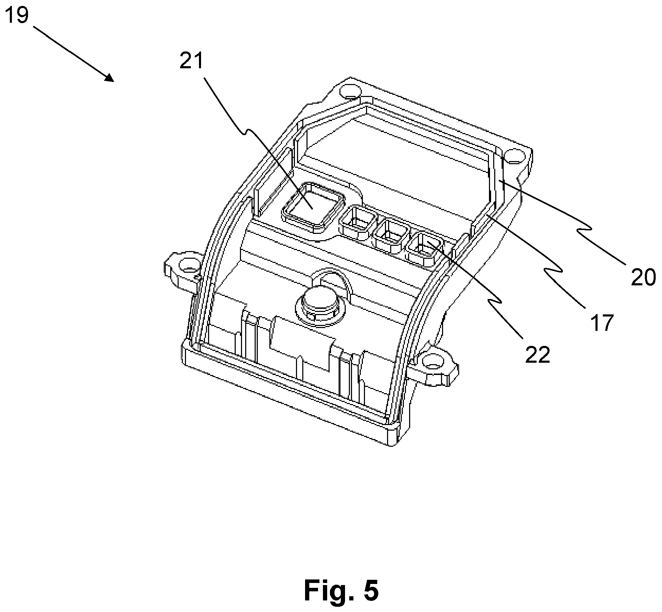

Der Schalter 11 ist hier als Verlängerung ausgebildet, da der eigentliche Schalter 11, also der elektrische Schalter, unterhalb der ersten Abtrennvorrichtung 19 angeordnet sein kann. Hierauf wird im Folgenden zur Figur 5 näher eingegangen.

Die erste Abtrennvorrichtung 19 ist in der Figur 5 detaillierter gezeigt. Die erste Abtrennvorrichtung 19 kann zumindest teilweise die erste Abdichtvorrichtung 17 aufweisen. Gemäß dem vorliegenden Ausführungsbeispiel umfasst die erste Abdichtvorrichtung 17 eine Abdichtnut 20. In diese Abdichtnut 20 kann beispielsweise ein Abdichtelement eingebracht werden. Das Abdichtelement kann beispielsweise eine Dichtmasse sein, die in die Abdichtnut 20 eingespritzt ist. Alternativ kann das Abdichtelement auch ein Gummi sein, der in die Abdichtnut 20 eingelegt ist.

Des Weiteren ist hier eine Schalterabdeckung 21 gezeigt, unter der sich der eigentliche elektrische Schalter 11 befindet. Der in den vorangegangenen Figuren gezeigte Schalter 11 kann, wie in den entsprechenden Figuren, als Verlängerung ausgebildet sein, so dass an der Außenseite des Gehäuses 2 und/oder des Akkus 1 der Schalter 11 betätigt werden kann, der unterhalb der ersten Abtrennvorrichtung 19 angeordnet ist.

Außerdem umfasst die erste Abtrennvorrichtung 19 eine Anzeigenabdeckung 22. Unter der Anzeigenabdeckung 22 können beispielsweise die LEDs der Anzeigeneinheit 12 angeordnet sein. Durch die Lichtleiter 23 kann das Licht der LEDs an die Außenseite 24 geleitet werden.

Durch die Schalterabdeckung 21 und/oder die Anzeigenabdeckung 22 können die LEDs und/oder der elektrische Schalter 11 vor dem Wasser im ersten Nassraum 6 geschützt werden. Die Schalterabdeckung 21 und/oder die Anzeigenabdeckung 22 sind vorteilhafterweise wasserdicht ausgebildet.

Figur 6 zeigt die Gehäuseoberschale 14 von oben bzw. mit Blick auf die Außenseite 24.

Die Gehäuseoberschale 14 weist zumindest eine Öffnung 25 - 35 für das Verriegelungselement 8, das Betätigungselement 9, die Anzeigeeinheit 12, die Lichtleiter 23, den Schalter 11 und/oder die Kontaktelemente 10 auf.

Die Gehäuseoberschale 14 weist eine erste Öffnung 25 für das Betätigungselement 9 auf. Die Gehäuseoberschale 14 weist eine zweite Öffnung 26 für das Verriegelungselement 8 auf. Die Gehäuseoberschale 14 weist eine dritte Öffnung 27, eine vierte Öffnung 28 und eine fünfte Öffnung 29 für die drei Lichtleiter 23 auf. Die Gehäuseoberschale 14 weist eine sechste Öffnung 30 für den Schalter 11 bzw. die Verlängerung für den Schalter 11 auf. Die Gehäuseoberschale 14 weist eine siebte, eine achte, eine neunte, eine zehnte und eine elfte Öffnung 31 - 35 für die jeweiligen Kontaktelemente 10 der Kontaktierungsvorrichtung 4 auf. Die hier gezeigten Öffnungen 25 - 35 können in beliebiger Kombination vorhanden sein. Durch die jeweiligen Öffnungen 25 - 35 erstrecken sich die entsprechenden Elemente an die Außenseite 24.

Durch die Öffnungen 25 - 35 kann jedoch Wasser in das Gehäuse 2 eintreten. Allerdings ist hierfür der zumindest eine Nassraum 6, 7 und die zumindest eine Abdichtvorrichtung 17 vorgesehen, so dass das Wasser zwar in den zumindest einen Nassraum 6, 7 gelangt, jedoch nicht in den Innenraum 3.

Falls Wasser beispielsweise in den ersten Nassraum 6 gelangt, kann durch Betätigen des Betätigungselements 9 der Spalt 18 zwischen dem Betätigungselement 9 und dem Gehäuse 2 bzw. der Gehäuseoberschale 14 ausgebildet werden, so dass das Wasser durch die ersten und/oder durch die zweite Öffnung 25, 26 austreten kann. Der Spalt 18 ist in der Figur 2 gezeigt, in der das Betätigungselement 9 betätigt bzw. gedrückt ist. Ein weiterer Spalt 18 kann auch zwischen dem Verriegelungselement 8 und dem Gehäuse 2 bzw. der Gehäuseoberschale 14 ausgebildet werden, so dass Wasser durch die zweite Öffnung 26 austreten kann.

Figur 7 zeigt eine perspektivische Ansicht von unten in die Gehäuseoberschale 14 hinein. Hier sind wieder die Öffnungen 25 - 35 zu sehen.

Außerdem ist hier auch die erste Abdichtvorrichtung 17 gezeigt. Die hier gezeigte erste Abdichtvorrichtung 17 kann beispielsweise ein Gegenstück zur ersten Abdichtnut 20 gemäß der Figur 5 sein.

Wie anhand der Figuren 5 und 7 zu sehen ist, ist die erste Abdichtvorrichtung 17 zwischen der ersten Abtrennvorrichtung 19 und dem Gehäuse 2 bzw. der Gehäuseoberschale 14 angeordnet und/oder ausgebildet. Hierdurch begrenzt das Gehäuse 2 bzw. die Gehäuseoberschale 14 sowie die erste Abtrennvorrichtung 19 den ersten Nassraum 6.

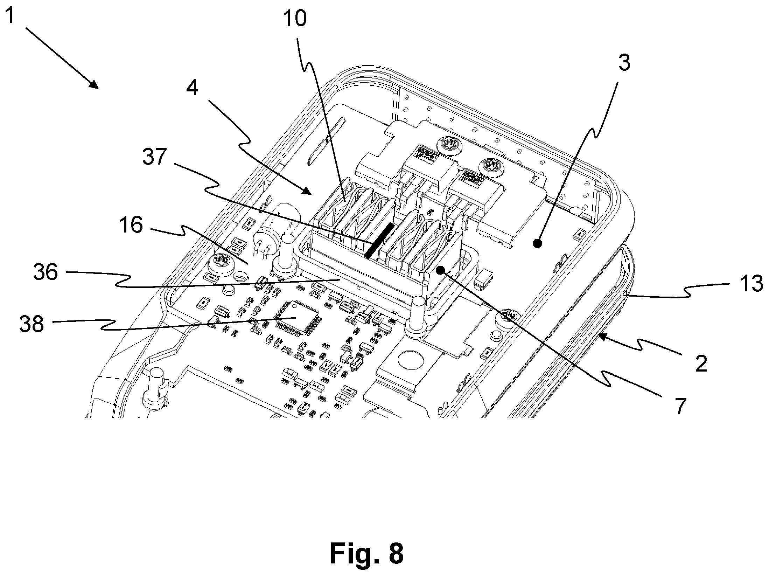

Figur 8 zeigt eine perspektivische Ansicht auf den Akku 1, wobei eine zweite Abtrennvorrichtung 36 zu sehen ist. Mit Hilfe der zweiten Abtrennvorrichtung 36 kann der zweite Nassraum 7 gegenüber dem Innenraum 3 wasserdicht abgetrennt werden.

Des Weiteren kann zwischen der Abtrennvorrichtung 36 und der Platine 16 und/oder zwischen der Abtrennvorrichtung 36 und dem Gehäuse 2 bzw. der Gehäuseoberschale 14 eine hier nicht gezeigte zweite Abdichtvorrichtung angeordnet sein. Die erste und die zweite Abdichtvorrichtung können hierbei zueinander gleich ausgebildet sein.

Gemäß dem vorliegenden Ausführungsbeispiel weist der Akku 1 zumindest einen Feuchtigkeitssensor 37 auf, mittels dem Feuchtigkeit bzw. Wasser erkannt werden kann. Der Feuchtigkeitssensor 37 ist im hier gezeigten Ausführungsbeispiel im zweiten Nassraum 7 und/oder im Bereich der Kontaktierungsvorrichtung 4 angeordnet. Der Feuchtigkeitssensor 37 umfasst gemäß dem vorliegenden Ausführungsbeispiel ein Sensorelement, das ein Fühler 39 sein kann. Der Fühler 39 kann in den entsprechenden zweiten Nassraum 7 hineinragen. Zusätzlich oder alternativ kann das Sensorelement auch zumindest eines der vier hier gezeigten Kontaktelemente 10 sein. Mit Hilfe des Kontaktelements 10 kann die Steuereinheit 38 beispielsweise anhand einer Potentialverschiebung die Feuchtigkeit ermitteln. Hierdurch kann die Feuchtigkeit im zweiten Nassraum 7 und/oder im Bereich der Kontaktierungsvorrichtung 4 erfasst werden. Im zweiten Nassraum 7 und/oder im Bereich der Kontaktierungsvorrichtung 4 sind die Kontaktelemente 10 angeordnet, so dass Feuchtigkeit in diesem Bereich zu einer Beschädigung des Akkus 1 bzw. der Energiespeichereinheit führen kann.

Der Akku 1 weist ferner eine Steuereinheit 38 auf, die insbesondere mit dem zumindest einen Feuchtigkeitssensor 37 verbunden ist. Wird mit Hilfe des Feuchtigkeitssensors 37 die Feuchtigkeit ermittelt, kann die Steuereinheit 38 den Akku 1 in einen Sicherheitszustand versetzen, so dass der Akku 1 vor Beschädigungen geschützt ist. Beispielsweise kann die Steuereinheit 38 die Kontaktelemente 10 spannungslos schalten.

Die Steuereinheit 38 kann auch Teil des Feuchtigkeitssensors 37 sein. Beispielsweise kann die Steuereinheit 38 oder ein Teil der Steuereinheit 38 mittels des Sensorelements, insbesondere des Fühlers 39 und/oder des Kontaktelements 10, die Feuchtigkeit ermitteln.

Der Akku 1 kann auch noch weitere Feuchtigkeitssensoren 37 und/oder Sensorelemente (10, 39) aufweisen. Zusätzlich oder alternativ kann auch ein Feuchtigkeitssensor 37 und/oder das Sensorelement (10, 39) im ersten Nassraum 6 und/oder im Innenraum 3 angeordnet sein.

Des Weiteren kann der zumindest eine Feuchtigkeitssensor 37 als kapazitiver Sensor ausgebildet sein. Der zumindest eine Feuchtigkeitssensor 37 kann ferner, wie hier angedeutet ist, als Pin ausgebildet sein, der in den zweiten Nassraum 7 und/oder in den Bereich der Kontaktierungsvorrichtung 4 hineinragt.

### Bezugszeichenliste

- 1: Akkumulator
- 2: Gehäuse
- 3: Innenraum
- 4: Kontaktierungsvorrichtung
- 5: Verriegelungsmechanismus
- 6: erster Nassraum
- 7: zweiter Nassraum
- 8: Verriegelungselement
- 9: Betätigungselement
- 10: Kontaktelement
- 11: Schalter
- 12: Anzeigeeinheit
- 13: Gehäuseunterschale
- 14: Gehäuseoberschale
- 15: Anzeigeelement
- 16: Platine
- 17: erste Abdichtvorrichtung
- 18: Spalt
- 19: erste Abtrennvorrichtung
- 20: Abdichtnut
- 21: Schalterabdeckung
- 22: Anzeigenabdeckung
- 23: Lichtleiter
- 24: Außenseite
- 25: erste Öffnung
- 26: zweite Öffnung
- 27: dritte Öffnung
- 28: vierte Öffnung
- 29: fünfte Öffnung
- 30: sechste Öffnung
- 31: siebte Öffnung
- 32: achte Öffnung
- 33: neunte Öffnung
- 34: zehnte Öffnung
- 35: elfte Öffnung
- 36: zweite Abtrennvorrichtung
- 37: Feuchtigkeitssensor
- 38: Steuereinheit
- 39: Fühler

## Patentansprüche

1. Akkumulator (1), insbesondere Arbeitsgeräteakkumulator, für Arbeitsgeräte
mit einem Gehäuse (2), das einen Innenraum (3) umgibt,
mit zumindest einer im Innenraum angeordneten Energiespeichereinheit,
mit einer Kontaktierungsvorrichtung (4), mittels der eine elektrische Verbindung zwischen der Energiespeichereinheit und dem Arbeitsgerät ausbildbar ist, und
mit einem Verriegelungsmechanismus (5), mittels dem der Akkumulator (1) mit dem Arbeitsgerät lösbar verbindbar ist,
**dadurch gekennzeichnet,**
**dass** im Gehäuse (2) zumindest ein Nassraum (6, 7) angeordnet ist, wobei im Nassraum (6, 7) zumindest teilweise der Verriegelungsmechanismus (5) und/oder zumindest teilweise die Kontaktierungsvorrichtung (4) angeordnet ist, und
**dass** der Akkumulator (1) zumindest eine Abdichtvorrichtung (17) umfasst, die den Innenraum (3) gegenüber dem zumindest einen Nassraum (6, 7) wasserdicht abdichtet.

2. Akkumulator nach dem vorherigen Anspruch, **dadurch gekennzeichnet, dass** der Akkumulator (1) einen ersten und einen zweiten Nassraum (6, 7) aufweist, wobei im ersten Nassraum (6) der Verriegelungsmechanismus (5) und im zweiten Nassraum (7) die Kontaktierungsvorrichtung (4) zumindest teilweise angeordnet ist.

3. Akkumulator nach einem oder mehreren der vorherigen Ansprüche, **dadurch gekennzeichnet, dass** der Akkumulator (1) zumindest eine Abtrennvorrichtung (19, 36) umfasst, die den Innenraum (3) vom zumindest einen Nassraum (6, 7) abtrennt, und
dass der Akkumulator (1) vorzugsweise eine erste Abtrennvorrichtung (19) für den ersten Nassraum (6) und vorzugsweise eine zweite Abtrennvorrichtung (36) für den zweiten Nassraum (7) umfasst.

4. Akkumulator nach einem oder mehreren der vorherigen Ansprüche, **dadurch gekennzeichnet, dass** der zumindest eine Nassraum (6, 7), insbesondere der erste und/oder der zweite Nassraum (6, 7), zwischen dem Gehäuse (2), insbesondere einer Gehäuseoberschale (14) des Gehäuses (2), und der zumindest einen Abtrennvorrichtung (19, 36), insbesondere der ersten und/oder der zweiten Abtrennvorrichtung (19, 36), ausgebildet ist.

5. Akkumulator nach einem oder mehreren der vorherigen Ansprüche, **dadurch gekennzeichnet, dass** der Verriegelungsmechanismus (5) zumindest ein Verriegelungselement (8) aufweist, mittels dem der Akkumulator (1) mit dem Arbeitsgerät verrastet werden kann, und
dass der Verriegelungsmechanismus (5) vorzugsweise zumindest ein Betätigungselement (9) aufweist, mittels dem das Verriegelungselement (5) betätigt werden kann, so dass der Akkumulator (1) vom Arbeitsgerät gelöst werden kann.

6. Akkumulator nach einem oder mehreren der vorherigen Ansprüche, **dadurch gekennzeichnet, dass** der Verriegelungsmechanismus (5), insbesondere das Verriegelungselement (8) und/oder das Betätigungselement (9), derart ausgebildet ist, dass Wasser, insbesondere in einer Entriegelungsstellung des Verriegelungsmechanismus (5), daran vorbei aus dem Nassraum (6, 7) austreten kann.

7. Akkumulator nach einem oder mehreren der vorherigen Ansprüche, **dadurch gekennzeichnet, dass** im, vorzugsweise ersten, Nassraum (6, 7) zumindest eine Anzeigeeinheit (12) angeordnet ist, mittels dem ein Ladezustand der Energiespeichereinheit angezeigt werden kann, und dass im, vorzugsweise ersten, Nassraum (6, 7) vorzugsweise ein Schalter (11) angeordnet ist, mittels dem die Anzeigeeinheit (12) aktiviert werden kann.

8. Akkumulator nach einem oder mehreren der vorherigen Ansprüche, **dadurch gekennzeichnet, dass** das Gehäuse (2), insbesondere die Gehäuseoberschale (14), zumindest eine Öffnung (25, 26, 27, 28, 29, 30, 31, 32, 33, 34, 35) aufweist, durch die das Verriegelungselement (8), das Betätigungselement (9), die Anzeigeeinheit (12) und/oder der Schalter (11) aus dem zumindest einen Nassraum (6, 7) an eine Außenseite (24) des Gehäuses (2) geführt ist.

9. Akkumulator nach einem oder mehreren der vorherigen Ansprüche, **dadurch gekennzeichnet, dass** das Verriegelungselement (5), das Betätigungselement (9), die Anzeigeeinheit (12) und/oder der Schalter (11) die Öffnung (25, 26, 27, 28, 29, 30, 31, 32, 33, 34, 35) zumindest teilweise verschließt.

10. Akkumulator nach einem oder mehreren der vorherigen Ansprüche, **dadurch gekennzeichnet, dass** die Abdichtvorrichtung (17) zwischen der Abtrennvorrichtung (19, 36) und dem Gehäuse (3), insbesondere der Gehäuseoberschale (14), angeordnet ist und/oder dass die zumindest eine Abdichtvorrichtung (17) die zumindest eine Öffnung (25, 26, 27, 28, 29, 30, 31, 32, 33, 34, 35) umrandet.

11. Akkumulator nach einem oder mehreren der vorherigen Ansprüche, **dadurch gekennzeichnet, dass** die Abdichtvorrichtung (17) eine Abdichtnut (20) und ein in der Abdichtnut (20) angeordnetes Abdichtelement umfasst, wobei das Abdichtelement vorzugsweise eine Dichtmasse, insbesondere eine Schaumraupe, ist.

12. Akkumulator nach einem oder mehreren der vorherigen Ansprüche, **dadurch gekennzeichnet, dass** das Wasser zwischen Verriegelungselement (8), Betätigungselement (9), Anzeigeeinheit (12) und/oder Schalter (11) und dem Gehäuse (2), insbesondere der Gehäuseoberschale (14), insbesondere durch die Öffnung (25, 26, 27, 28, 29, 30, 31, 32, 33, 34, 35), aus dem Nassraum (6, 7) austreten kann.

13. Akkumulator nach einem oder mehreren der vorherigen Ansprüche, **dadurch gekennzeichnet, dass** die Abtrenneinheit (19, 36) eine Schalterabdeckung (21) aufweist, so dass der Schalter (11) wasserdicht gegenüber dem Nassraum (6, 7) abgedichtet ist, und/oder dass die Abtrennvorrichtung (19, 36) eine Anzeigenabdeckung (22) aufweist, so dass die Anzeigeeinheit (12) wasserdicht gegenüber dem Nassraum (6, 7) abgedichtet ist.

14. Akkumulator nach einem oder mehreren der vorherigen Ansprüche, **dadurch gekennzeichnet, dass** der Akkumulator (1) einen Feuchtigkeitssensor (37) zur Ermittlung einer Feuchtigkeit im ersten Nassraum (6), im zweiten Nassraum (7), im Innenraum (3) und/oder im Bereich der Kontaktierungsvorrichtung (4) umfasst, wobei der Feuchtigkeitssensor (37) ein Sensorelement (10, 39) umfasst, das im ersten Nassraum (6), im zweiten Nassraum (7), im Innenraum (3) und/oder im Bereich der Kontaktierungsvorrichtung (4) angeordnet ist, wobei das Sensorelement vorzugsweise ein Kontaktelement (10) und/oder ein Fühler (39) ist.

15. Akkumulator nach einem oder mehreren der vorherigen Ansprüche, **dadurch gekennzeichnet, dass** der Akkumulator (1) eine Steuereinheit (38) umfasst, die derart ausgebildet ist, dass diese bei mittels des zumindest einen Feuchtigkeitssensors (37) erkannter Feuchtigkeit den Akkumulator (1) in einen Sicherheitszustand versetzen kann.

## Claims

1. An Accumulator (1), in particular working equipment accumulator, for working equipment
having a housing (2) which surrounds an internal space (3),
having at least one energy storage unit arranged in the internal space, having a contact device (4) by means of which an electrical connection can be formed between the energy storage unit and the working equipment, and
having a locking mechanism (5) by means of which the accumulator (1) can be releasably connected to the working equipment,
**characterized in that**,
at least one wet space (6, 7) is arranged in the housing (2), wherein the locking mechanism (5) and/or the contact device (4) is/are at least partially arranged in the wet space (6, 7), and
**in that** the accumulator (1) comprises at least one sealing device (17) which seals the internal space (3) in a water-tight manner with respect to the at least one wet space (6, 7).

2. The accumulator as claimed in the preceding claim, **characterized in that** the accumulator (1) has a first and a second wet space (6, 7), wherein the locking mechanism (5) is at least partially arranged in the first wet space (6) and the contact device (4) is at least partially arranged in the second wet space (7).

3. The accumulator as claimed in one or more of the preceding claims, **characterized in that** the accumulator (1) comprises at least one separating device (19, 36) which separates the internal space (3) from the at least one wet space (6, 7), and
**in that** the accumulator (1) preferably comprises a first separating device (19) for the first wet space (6) and preferably a second separating device (36) for the second wet space (7).

4. The accumulator as claimed in one or more of the preceding claims, **characterized in that** the at least one wet space (6, 7), in particular the first and/or the second wet space (6, 7), is formed between the housing (2), in particular an upper housing shell (14) of the housing (2), and the at least one separating device (19, 36), in particular the first and/or the second separating device (19, 36).

5. The accumulator as claimed in one or more of the preceding claims, **characterized in that** the locking mechanism (5) has at least one locking element (8) by means of which the accumulator (1) can be latched to the working equipment, and
**in that** the locking mechanism (5) preferably has at least one actuating element (9) by means of which the locking element (5) can be actuated such that the accumulator (1) can be released from the working equipment.

6. The accumulator as claimed in one or more of the preceding claims, **characterized in that** the locking mechanism (5), in particular the locking element (8) and/or the actuating element (9), is designed in such a way that water, in particular in an unlocking position of the locking mechanism (5), can exit from the wet space (6, 7) past said locking mechanism.

7. The accumulator as claimed in one or more of the preceding claims, **characterized in that** at least one display unit (12) is arranged in the, preferably first, wet space (6, 7), by means of which display unit a state of charge of the energy storage unit can be displayed, and **in that** a switch (11) is preferably arranged in the, preferably first, wet space (6, 7), by means of which switch the display unit (12) can be activated.

8. The accumulator as claimed in one or more of the preceding claims, **characterized in that** the housing (2), in particular the upper housing shell (14), has at least one opening (25, 26, 27, 28, 29, 30, 31, 32, 33, 34, 35) through which the locking element (8), the actuating element (9), the display unit (12) and/or the switch (11) is guided from the at least one wet space (6, 7) to an outer surface (24) of the housing (2).

9. The accumulator as claimed in one or more of the preceding claims, **characterized in that** the locking element (5), the actuating element (9), the display unit (12) and/or the switch (11) at least partially closes the opening (25, 26, 27, 28, 29, 30, 31, 32, 33, 34, 35).

10. The accumulator as claimed in one or more of the preceding claims, **characterized in that** the sealing device (17) is arranged between the separating device (19, 36) and the housing (3), in particular the upper housing shell (14), and/or
**in that** the at least one sealing device (17) borders the at least one opening (25, 26, 27, 28, 29, 30, 31, 32, 33, 34, 35).

11. The accumulator as claimed in one or more of the preceding claims, **characterized in that** the sealing device (17) comprises a sealing groove (20) and a sealing element arranged in the sealing groove (20), wherein the sealing element is preferably a sealing compound, in particular a foam bead.

12. The accumulator as claimed in one or more of the preceding claims, **characterized in that** the water between the locking element (8), actuating element (9), display unit (12) and/or switch (11) and the housing (2), in particular the upper housing shell (14), can exit from the wet space (6, 7), in particular through the opening (25, 26, 27, 28, 29, 30, 31, 32, 33, 34, 35).

13. The accumulator as claimed in one or more of the preceding claims, **characterized in that** the separating unit (19, 36) has a switch cover (21) such that the switch (11) is sealed in a water-tight manner with respect to the wet space (6, 7), and/or
**in that** the separating device (19, 36) has a display cover (22) such that the display unit (12) is sealed in a water-tight manner with respect to the wet space (6, 7).

14. The accumulator as claimed in one or more of the preceding claims, **characterized in that** the accumulator (1) comprises a moisture sensor (37) for determining a moisture in the first wet space (6), in the second wet space (7), in the internal space (3) and/or in the region of the contact device (4), wherein the moisture sensor (37) comprises a sensor element (10, 39) which is arranged in the first wet space (6), in the second wet space (7), in the internal space (3) and/or in the region of the contact device (4), wherein the sensor element is preferably a contact element (10) and/or a detector (39).

15. The accumulator as claimed in one or more of the preceding claims, **characterized in that** the accumulator (1) comprises a control unit (38) which is designed in such a way that it can set the accumulator (1) into a safety state in the case of moisture detected by means of the at least one moisture sensor (37).

## Revendications

1. Accumulateur (1), en particulier accumulateur d'outil de travail, pour outils de travail
comprenant un boîtier (2) qui entoure un espace intérieur (3), comprenant au moins une unité de stockage d'énergie disposée dans l'espace intérieur,
comprenant un dispositif de mise en contact (4) au moyen duquel une connexion électrique peut être réalisée entre l'unité de stockage d'énergie et l'outil de travail, et
comprenant un mécanisme de verrouillage (5) au moyen duquel l'accumulateur (1) peut être connecté de manière amovible à l'outil de travail,
**caractérisé en ce que**,
au moins un espace humide (6, 7) est disposé dans le boîtier (2), le mécanisme de verrouillage (5) et/ou au moins partiellement le dispositif de mise en contact (4) étant disposés au moins partiellement dans l'espace humide (6, 7), et
l'accumulateur (1) comprend au moins un dispositif d'étanchéité (17) qui étanche l'espace intérieur (3) de manière imperméable à l'eau par rapport à l'au moins un espace humide (6, 7).

2. Accumulateur selon la revendication précédente, **caractérisé en ce que** l'accumulateur (1) présente un premier et un deuxième espace humide (6, 7), le mécanisme de verrouillage (5) étant disposé au moins partiellement dans le premier espace humide (6) et le dispositif de mise en contact (4) étant disposé au moins partiellement dans le deuxième espace humide (7).

3. Accumulateur selon l'une quelconque ou plusieurs des revendications précédentes, **caractérisé en ce que** l'accumulateur (1) comprend au moins un dispositif de séparation (19, 36) qui sépare l'espace intérieur (3) de l'au moins un espace humide (6, 7), et
l'accumulateur (1) comprend de préférence un premier dispositif de séparation (19) pour le premier espace humide (6) et de préférence un deuxième dispositif de séparation (36) pour le deuxième espace humide (7).

4. Accumulateur selon l'une quelconque ou plusieurs des revendications précédentes, **caractérisé en ce que** l'au moins un espace humide (6, 7), en particulier le premier et/ou le deuxième espace humide (6, 7), est réalisé entre le boîtier (2), en particulier une coque supérieure de boîtier (14) du boîtier (2), et l'au moins un dispositif de séparation (19, 36), en particulier le premier et/ou le deuxième dispositif de séparation (19, 36).

5. Accumulateur selon l'une quelconque ou plusieurs des revendications précédentes, **caractérisé en ce que** le mécanisme de verrouillage (5) présente au moins un élément de verrouillage (8) au moyen duquel l'accumulateur (1) peut être encliqueté avec l'outil de travail, et
le mécanisme de verrouillage (5) présente de préférence au moins un élément d'actionnement (9) au moyen duquel l'élément de verrouillage (5) peut être actionné de telle sorte que l'accumulateur (1) puisse être détaché de l'outil de travail.

6. Accumulateur selon l'une quelconque ou plusieurs des revendications précédentes, **caractérisé en ce que** le mécanisme de verrouillage (5), en particulier l'élément de verrouillage (8) et/ou l'élément d'actionnement (9), est réalisé de telle sorte que de l'eau, en particulier dans une position de déverrouillage du mécanisme de verrouillage (5), puisse sortir de l'espace humide (6, 7) le long de celui-ci.

7. Accumulateur selon l'une quelconque ou plusieurs des revendications précédentes, **caractérisé en ce que** dans l'espace humide (6, 7), de préférence le premier, est disposée au moins une unité d'affichage (12) au moyen de laquelle un état de charge de l'unité de stockage d'énergie peut être affiché, et **en ce que** dans l'espace humide (6, 7), de préférence le premier, est disposé de préférence un commutateur (11) au moyen duquel l'unité d'affichage (12) peut être activée.

8. Accumulateur selon l'une quelconque ou plusieurs des revendications précédentes, **caractérisé en ce que** le boîtier (2), en particulier la coque supérieure de boîtier (14), présente au moins une ouverture (25, 26, 27, 28, 29, 30, 31, 32, 33, 34, 35) à travers laquelle l'élément de verrouillage (8), l'élément d'actionnement (9), l'unité d'affichage (12) et/ou le commutateur (11) sont guidés depuis l'au moins un espace humide (6, 7) jusqu'à un côté extérieur (24) du boîtier (2).

9. Accumulateur selon l'une quelconque ou plusieurs des revendications précédentes, **caractérisé en ce que** l'élément de verrouillage (5), l'élément d'actionnement (9), l'unité d'affichage (12) et/ou le commutateur (11) ferment au moins partiellement l'ouverture (25, 26, 27, 28, 29, 30, 31, 32, 33, 34, 35).

10. Accumulateur selon l'une quelconque ou plusieurs des revendications précédentes, **caractérisé en ce que** le dispositif d'étanchéité (17) est disposé entre le dispositif de séparation (19, 36) et le boîtier (3), en particulier la coque supérieure de boîtier (14), et/ou **en ce que** l'au moins un dispositif d'étanchéité (17) borde l'au moins une ouverture (25, 26, 27, 28, 29, 30, 31, 32, 33, 34, 35).

11. Accumulateur selon l'une quelconque ou plusieurs des revendications précédentes, **caractérisé en ce que** le dispositif d'étanchéité (17) comprend une rainure d'étanchéité (20) et un élément d'étanchéité disposé dans la rainure d'étanchéité (20), l'élément d'étanchéité étant de préférence une masse d'étanchéité, en particulier une chenille en mousse.

12. Accumulateur selon l'une quelconque ou plusieurs des revendications précédentes, **caractérisé en ce que** l'eau entre l'élément de verrouillage (8), l'élément d'actionnement (9), l'unité d'affichage (12) et/ou le commutateur (11) et le boîtier (2), en particulier la coque supérieure de boîtier (14), peut sortir de l'espace humide (6, 7), en particulier à travers l'ouverture (25, 26, 27, 28, 29, 30, 31, 32, 33, 34, 35).

13. Accumulateur selon l'une quelconque ou plusieurs des revendications précédentes, **caractérisé en ce que** l'unité de séparation (19, 36) présente un couvercle de commutateur (21) de telle sorte que le commutateur (11) soit étanché de manière imperméable à l'eau par rapport à l'espace humide (6, 7), et/ou
le dispositif de séparation (19, 36) présente un couvercle d'affichage (22) de telle sorte que l'unité d'affichage (12) soit étanchée de manière imperméable à l'eau par rapport à l'espace humide (6, 7).

14. Accumulateur selon l'une quelconque ou plusieurs des revendications précédentes, **caractérisé en ce que** l'accumulateur (1) comprend un capteur d'humidité (37) pour déterminer une humidité dans le premier espace humide (6), dans le deuxième espace humide (7), dans l'espace intérieur (3) et/ou dans la zone du dispositif de mise en contact (4), le capteur d'humidité (37) comprenant un élément de capteur (10, 39) qui est disposé dans le premier espace humide (6), dans le deuxième espace humide (7), dans l'espace intérieur (3) et/ou dans la zone du dispositif de mise en contact (4), l'élément de capteur étant de préférence un élément de contact (10) et/ou un détecteur (39).

15. Accumulateur selon l'une quelconque ou plusieurs des revendications précédentes, **caractérisé en ce que** l'accumulateur (1) comprend une unité de contrôle (38) qui est réalisée de telle sorte que celle-ci puisse mettre l'accumulateur (1) dans un état de sécurité lorsque l'humidité est détectée au moyen de l'au moins un capteur d'humidité (37).
